# EUROPÄISCHE PATENTSCHRIFT

(11) **EP 4 341 027 B1**
(45) Veröffentlichungstag und Bekanntmachung des Hinweises auf die Patenterteilung: **07.05.2025**
(21) Anmeldenummer: 22730368.2
(22) Anmeldetag: 17.05.2022
(51) Int. Cl.: B23B 51/04, B23B 31/163

(54) **SCHNELLWECHSELSPANNFUTTER FÜR EINE LOCHSÄGE SOWIE LOCHSÄGENANORDNUNG MIT EINEM SCHNELLWECHSELSPANNFUTTER UND EINER LOCHSÄGE**
QUICK-CHANGE CHUCK FOR A HOLE SAW, AND HOLE SAW ASSEMBLY HAVING A QUICK-CHANGE CHUCK AND A HOLE SAW
MANDRIN À SERRAGE RAPIDE POUR SCIE CLOCHE ET ENSEMBLE SCIE CLOCHE COMPRENANT UN MANDRIN À SERRAGE RAPIDE ET UNE SCIE CLOCHE

(30) Priorität: 19.05.2021 DE 102021112968
(43) Veröffentlichungstag der Anmeldung: 27.03.2024
(73) Patentinhaber: Colt Technologies GmbH, 51789 Lindlar (DE)
(72) Erfinder: MIEBACH, Jürgen, 51789 Lindlar (DE)
(74) Vertreter: Bobzien, Hans Christoph
(86) Internationale Anmeldenummer: PCT/EP2022/063247
(87) Internationale Veröffentlichungsnummer: WO 2022/243275

(56) Entgegenhaltungen:
- EP-B1- 3 429 789
- WO-A1-2012/121601
- WO-A1-2019/090123

## Beschreibung

Die Erfindung betrifft ein Schnellwechselspannfutter zur Verbindung einer Lochsäge mit einem Antrieb, z. B. einer Bohrmaschine.

### Stand der Technik

Im Besonderen betrifft die Erfindung ein um eine Drehachse rotierbares Schnellwechselspannfutter zum lösbaren Halten einer Lochsäge, das sich entlang der Drehachse von einem hinteren oder proximalen Antriebsende, ausgebildet zur lösbaren Verbindung mit einem Antrieb, zu einem vorderen oder distalen Verbindungsende, ausgebildet zur lösbaren Verbindung mit der Lochsäge erstreckt.

In dieser Beschreibung beziehen sich die Richtungsbegriffe distal und proximal auf einen mit dem Antriebsende der Lochsägeanordnung verbindbaren Antrieb. Proximal ist also zu diesem Antrieb am Antriebsende hin orientiert und distal ist von diesem Antrieb weg orientiert.

Das Schnellwechselspannfutter umfasst einen Grundkörper, welcher ausgebildet ist, um mindestens eine Spannbacke
relativbeweglich verstellbar im Verhältnis zur Drehachse aufzunehmen. An dem Verbindungsende sind um die Drehachse herum Gewindesegmente zur Bildung eines auf Außengewindes vorgesehen, von denen mindestens ein Gewindesegment an der relativbeweglichen Spannbacke ausgebildet ist. Zwischen der Spannbacke und dem Grundkörper ist eine Feder angeordnet, so dass das mindestens eine Gewindesegment aus einer radial weiter außen gelegenen Eingriffstellung gegen eine Federkraft der Feder in eine im Verhältnis zu dieser Eingriffstellung weiter radial nach innen gelegenen Freigabestellung bewegbar ist. Das Außengewinde greift in der Eingriffstellung in eine korrespondierende Zentralgewindeöffnung in einem Sägeboden der Lochsäge ein und verbindet das Schnellwechselspannfutter so drehfest mit der Lochsäge. Ferner können Mitnehmerbolzen zwischen dem Verbindungsende und der Lochsäge ausgebildet sein, die in Einbaulage in korrespondierend ausgebildete Löcher in einem Sägeboden der Lochsäge eingreifen. In das Spannfutter ist vorzugsweise über eine seitlich eindrehbare Madenschraube zudem ein sich entlang der Drehachse erstreckender Zentrierbohrer lösbar einsetzbar.

Abstrakt befasst sich die Erfindung mit einer Vorrichtung zum einfachen Koppeln und Wechseln einer Lochsäge mit einem Antrieb. Derartige Schnellwechselkupplungen gibt es in zahlreichen verschiedenen Ausführungsformen für die industrielle und professionelle Anwendung, wobei unterschiedlich große Lochsägen mit unterschiedlich großen Durchmessern an der Lochsäge eingesetzt werden. Die Lochsägen sind üblicherweise kastenartig oder topfförmig ausgebildet mit einem kreiszylindrischen Sägekranz, der an dem freien Vorderende eine Sägestruktur aufweist und an einem hinteren Ende mit einem Träger verbindbar ist oder einen Halter oder eine Trageplatte aufweist.

Zudem betrifft die Erfindung eine Lochsägeanordnung umfassend ein Schnellwechselspannfutter, eine mit diesem lösbar, aber drehfest verbindbare Lochsäge sowie einen lösbar, aber drehfest verbindbaren Zentrierbohrer.

Ein gattungsgemäßes Schnellwechselspannfutter sowie eine Lochsägeanordnung der genannten Art sind z. B. bekannt aus der EP 3 429 789 B1 oder der WO 2019/090123 A1.

DE 20 2013 006 690 U1 offenbart ein Spannfutter anderer Art, bei dem die Lochsäge mit einem Anschlussstutzen verschraubt ist, der in einem Aufnahmeschaft einsteckbar und in diesem über eine Kugelraste fixierbar ist. Durch axiales Verschieben einer die Kugelraste außenseitig umfassenden Sicherungshülse kann die Kugelraste gelöst und somit der Anschlussstutzen mit der Lochsäge aus dem Aufnahmeschaft entnommen werden.

### Nachteile am Stand der Technik

Das Zusammendrücken der Spannbacke zum Lösen der Lochsäge, also zum Überführen der Spannbacke von dem Eingriff in die Freigabestellung erfordert viel Kraft vom Nutzer und ist insofern für den Benutzer nicht immer einfach zu vollziehen.

Ferner können verschiedene Probleme durch die nicht rotationssymmetrische Ausgestaltung und damit bedingt ungleiche Gewichtsverteilung des Schnellwechselspannfutters um die Drehachse herum auftreten, die damit zusammenhängen, dass sich die Spannbacke insbesondere bei höheren Drehzahlen aufgrund der Unwucht aus der Mitte heraus bewegt, also von der Mitte nach außen versetzt, wobei die Spannbacke abbrechen kann und Verletzungen hervorrufen kann.

Diese Probleme treten insbesondere beim Bohrvorgang eines sogenannten "unterbrochenen Schnitt" auf, bei dem zwei Löcher gebohrt werden, deren Bohrungsdurchmesser ineinandergreifen, greift die Lochsäge beim Bohren des zweiten Lochs nicht immer mit Material in Eingriff, so dass eine Unwucht auftritt, welche die Lochsäge aus der Rotationsbewegung bringen und deshalb gefährlich sind.

Ähnliche Probleme treten beim schrägen Bohren in einer Fläche auf, bei welchem ebenfalls ein Abschnitt der Lochsäge früher in das Material eingreift als ein anderer.

Auch hierbei kann die auftretende Unwucht dazu führen, dass sich die Spannbacke und somit die Lochsäge unbeabsichtigt löst.

Problematisch beim Stand der Technik ist ferner, dass die beiden Gewindesegmente nur in einer Längsrichtung zusammengedrückt werden und der Gewindedurchmesser somit nur in Längsrichtung reduziert wird. Quer zu der Richtung, in welcher die Gewindesegmente zusammengedrückt werden, sind die Seitenflächen der Gewinde abgeflacht, damit durch das Zusammendrücken in Längsrichtung das Außengewinde in Querrichtung nicht mehr in das Innengewinde eingreift. Dieses hat zur Folge, dass die Lochsäge nur im Winkelbereich von etwa 30 bis 40 Grad an den beiden in Längsrichtung verstellbaren Innengewindesegmenten anliegen somit wird also ein Großteil des Gewindesegments nicht für die Befestigung der Lochsäge an der im Grundkörper verwendet werden kann, was die Haltbarkeit reduziert.

### Aufgabe

Ausgehend von dem zuvor genannten Stand der Technik liegt der Erfindung die Aufgabe zugrunde, die aufzeigten Nachteile zumindest teilweise zu vermeiden und insbesondere ein Schnellwechselspannfutter vorzusehen, bei dem das Wechseln der Lochsäge besonders ist.

### Erfindung

Gelöst wird diese Aufgabe bereits durch die Merkmale des unabhängigen Anspruchs 1. Vorteilhafte Weiterentwicklungen sind in den Unteransprüchen beschrieben.

Erfindungsgemäß wird diese Aufgabe bei einem Schellwechselspannfutter der eingangs genannten Art bereits durch einen Spannring gelöst, der um die Drehachse drehbar ist und ferner ausgebildet ist, um bei einer Drehung die mindestens eine Spannbacke aus der Eingriff- in die Freigabestellung zu überführen. Dieser Spannring bildet somit ein Lineargetriebe, wandelt also eine Rotationsbewegung in eine Translationsbewegung der Spannbacke um. Somit muss der Spannring nur noch vom Benutzer gedreht werden zum Lösen der mindestens einen Spannbacke und deren Überführung in die Freigabestellung, was wesentlich einfacher ist als das beim Stand der Technik erforderliche Zusammendrücken. Hierzu ist zwischen Spannring und mindestens einer Spannbacke ferner ein Kulissenantrieb vorgesehen, womit gemeint ist, dass die Bauteile jeweils eins aus der Gruppe der Führungskurve und in diesen eingreifenden und durch diese geführte Führungsstifte umfassen. Die Führungskurve führt also den Führungsstift bei Drehung des Spannrings um die Drehachse entlang einer oder beider Längsseiten der Führungskurven. Die Führungskurve ist geometrisch so gestaltet, dass bei der Drehung des Spannrings das Verstellen der mindestens einen Spannbacke um den gewünschten Betrag erfolgt, der vorzugsweise lediglich 1 bis 5 mm, insbesondere 1 bis 3 mm, besonders bevorzugt 1,4 bis 1,5 mm beträgt. Vorzugsweise ist die Führungskurve als Kurvenabschnitt ausgebildet, der insbesondere ausgebildet ist wie ein Kreisabschnitt.

Zu diesem Zweck ist in dem Spannring bzw. in der sich in Einbaulage quer zur Drehachse erstreckenden Spannringhauptebene des Spannrings ausgebildete Führungskurven mit einem Kurvenvorderende und einem Kurvenhinterende vorgesehen, in das ein komplementär ausgebildeter Führungsstift, also insbesondere ein mit der distalen Vorderseite der Spannbacke verbundener Stift, insbesondere ein vorderseitig in die Spanbacke eingesteckter Stift, an dem jeweils anderen Fügepartner eingreift und relativ beweglich in der Führungskurve beim Öffnen und Schließen des Spannrings geführt ist. Die Mitte des Kurvenvorderendes liegt dabei auf einem Mittelkreis der Führungskurve, einem gedachten Kreis, welcher sich um die Drehachse herum durch die Mitte der Führungskurve erstreckt. Das Kurvenhinterende ist hingegen im Verhältnis zu diesem Mittelkreis radial nach innen oder außen versetzt, sodass also der in der Führungskurve geführte Backen- oder Führungsstift bei der Drehung des Spannrings entlang der Außenkante der Führungskurve radial nach außen oder innen bewegt wird.

Die Führungskurve bildet damit eine Führungskulisse, also eine aus einer diese umschließenden, insbesondere durch den Spannring definierten Fläche, in der eine rinnenartige Führung für den Führungsstift vorgesehen ist, die am Hinterende im Vergleich zum Vorderende weitere von der zentralen Drehachse hin entfernt ist, also von der Kreisbahn abweicht.

Vorzugsweise ist die Führungskulisse so ausgebildet, dass die Spannbacke durch die Kraft der Feder in die radial weiter außen gelegene Eingriffstellung bewegt wird.

Vorzugsweise ist der Kulissentrieb so ausgebildet, dass bei Ausführungen einer Relativbewegung zwischen Führungskurve und Führungsstift der Führungsstift entlang der radialen Außenkante geführt wird, wobei die Spannbacke deshalb radial in dem Grundkörper verschoben wird, weil der radiale Abstand des Kurvenanfangs der Führungskurve zur Drehachse anders ist als der Abstand des Kurvenendes, womit die Führungskurve sich also in Drehrichtung entweder auf die Drehachse zu oder von dieser weg bewegt.

Erfindungsgemäß ist die Ausbildung der Führungskurve an dem Spannring und erfindungsgemäß die Ausbildung des Führungsstifts an der Spannbacke.

An der Spannbacke kann der Führungsstift entweder einstückig vorgesehen, also angeformt sein oder in diesen einsteckbar ausgebildet sein, z.B. als einen in eine entsprechende Aufnahmeöffnung einsteckbarer Stift.

Bei der besonders bevorzugten Ausführungsform ist die Führungskurve als bogenförmiges Kurvensegmente ausgebildet, welches sich als Bogenabschnitt auf einem gedachten Kreis erstreckt, welcher die Drehachse umschließt und mittig durch die Führungskurve verläuft. Zur Realisierung des notwendigen Versatzes sind jedoch das Kurvenvorderende und das Kurvenhinterende radial versetzt zu diesem gedachten Kreis ausgebildet, sodass also ein radiales Verschieben des in der Führungskurve geführten Führungsstifts bei der Drehung des Spannrings erfolgt.

Die mindestens eine Spannbacke sitzt radial beweglich in einer geometrisch komplementär ausgebildeten Spannbackenaufnahme an dem möglichst rotationssymmetrisch ausgebildeten Grundkörper, insbesondere ausgebildet als Ausnehmung oder dergleichen, in welcher die Spannbacke radialbeweglich sitzt und geführt ist, also radial im Verhältnis zur Drehachse hin- und her bewegt werden kann.

Die Spannbacke kann einen in Einbaulage dem Grundkörper zugewandten Einsatzabschnitt umfassen, welcher relativbeweglich in der korrespondierenden Spannbackenaufnahme des Grundkörpers sitz. An diesem Einsatzabschnitt ist an ein Klemmabschnitt ausgebildet, vorzugsweise einstückig angeformt, der sich in Einbaulage parallel versetzt zur Drehachse, diese vorzugsweise teilweise umschließend in proximaler Richtung, also nach oben erstreckt. Auf diesen Klemmabschnitt ist die Lochsäge mit dem Lochsägeboden und der darin vorgesehenen Zentralgewindeöffnung mit einem Innengewinde aufsetzbar.

Vorzugsweise erstrecken sich der Einsatz- und der Klemmabschnitt in einem rechten Winkel zueinander, schließen also einen rechten Winkel zwischen sich ein.

Bei der bevorzugten Ausführungsform, welche zur Befestigung von Lochsägen mit unterschiedlich großen Außendurchmessern und somit unterschiedlich großen Innendurchmesser der in dem Sägeboden vorgesehenen Zentralgewindeöffnungen ausgebildet sind, weist der Klemmabschnitt einen sich an den Einsatzabschnitt angrenzenden, distal erstreckenden Hohlzylinderabschnitt auf, der vorzugsweise kein Außengewinde aufweist und einen etwas größeren Außendurchmesser aufweist als ein sich weiter distal an diesen Hohlzylinderabschnitt anschließender Gewindeabschnitt. Bevorzugt ist zwischen dem so gebildeten, in Einbaulage unteren Hohlzylinderabschnitt und dem oberen Gewindeabschnitt mit kleinerem Außendurchmesser ein radial nach außen ragender Trennungsflansch ausgebildet sein.

So kann für kleiner Lochsägen ein als Distanzelement fungierender Adapterring auf den Hohlzylinder- bzw. den Klemmabschnitt der Spannbacke aufgesetzt werden, auf welcher der Sägeboden der Lochsäge aufsitzt, dass die Lochsägen mit einen Zentralgewindedurchmesser 9/16 - Zoll mit dem oberen Gewindesegment verbindbar sind.

Für Größere Lochsägen mit entsprechend größeren Zentralgewindeöffnungen kann dieser Adapterring hingegen entfernt werden, so dass diese Lochsägen, die vorzugsweise ein Innendurchmesser der Zentralgewindeöffnung von 5/8-Zoll aufweisen, mit dem unteren Hohlzylinderabschnitt des Klemmabschnitts der Spannbacke verklemmt werden.

Vorzugsweise ist an der radialen Innenseite zwischen der Spannbacke und einem Zentralbereich des Grundkörpers eine Feder angeordnet, welche die Spannbacke radial nach außen in die Eingriffstellung drückt.

Der um die Drehachse drehbare Spannring ist somit auf dem Grundkörper angeordnet, vorzugsweise auf dem distalen Ende, welches hier als das von dem Antrieb abgewandte Ende bezeichnet wird, womit das zum Antrieb hingewandte Ende, also das Antriebsende, das proximale Ende des Spannfutters darstellt. Durch eine einfache Drehung des Spannrings um die Drehachse wird somit eine Linearverstellung der mindestens einen Spannbacke aus der weiter außen im Verhältnis zur Drehachse gelegenen Eingriffstellung in die weiter radial nach innen im Verhältnis zur Eingriffstellung gelegene Freigabestellung bewirkt, wodurch sich also die mit den Spannbacken verbundenen oder an diesen ausgebildeten Gewindesegmente beim Lösen auf die Drehachse und aufeinander und beim Anziehen von der Drehachse und voneinander weg bewegen.

Bevorzugt ist der Spannring an dem vorderen distalen Ende des Grundkörpers angeordnet, z.B. stirnseitig auf das Spannfutter aufgesetzt. Zur Führung des Spannrings auf dem Spannfutter sind zwischen den beiden Fügepartnern (Spannring, Spannfutter) als Ausrichtungsmittel fungierende Spannringpositioniermittel ausgebildet, welche eine koaxiale Anordnung des Spannrings auf dem Spannfutter realisieren, gleichzeitig aber auch eine einfache Drehung des Spannrings im Verhältnis zu dem dann stationären Spannfutter ermöglichen. Diese Spannringpositioniermittel können z.B. einen außenseitigen Rand oder Flansch umfassen, der den Außenrand des vorzugsweise kreisrunden Grundkörpers umgreift, sodass der Spannring quasi wie ein Deckel mit einem außenseitigen Flansch oder Absatz auf dem Grundkörper aufsitzt. Vorzugsweise umfassen diese Spannringpositioniermittel also einen sich insbesondere quer zur durch den Spannring definierten Ebene (Spannringhauptebene) erstreckenden Flansche oder einen Flansch, der radial außenseitig aufgesetzt auf das Spannfutter die äußere Umfangskante des Spannfutters umgreift.

Besonders bevorzugt ist das Lineargetriebe so gestaltet, dass bei einer Drehung die Bewegung der mindestens einen Spannbacke und die an dieser ausgebildeten Gewindesegmente sich von der Eingriff- in die Freigabestellung bewegt und umgekehrt, die mindestens eine Spannbacken also radial zur Drehachse gezogen oder von dieser weggeschoben wird beim Drehen des Spannrings, insbesondere geführt in der korrespondierend zur Aufnahme der Spannbacke ausgebildeten Spannbackenaufnahme in dem Grundkörper.

Das Schnellwechselspannfutter kann eine Arretierung, um ein unbeabsichtigtes Lösen der Spannbacken zu verhindern.

Bevorzugt weist diese Arretierung an dem Kurvenvorderende der Backeneinzugskurve einen radial nach außen ragenden Fortsatz, Vorsprung oder dergleichen auf, der eine Sperrkraft realisiert, die zum Lösen zunächst überwunden werden muss, in welche der Führungsstift somit in der Eingriffstellung eingreift. Vorzugsweise realisiert die Federkraft nach Überwinden dieser initialen Sperrkraft ein selbständiges Öffnen der mindestens einen Spannbacke, so dass diese also ausgebildet ist, um diese dann selbstständig in die Eingriff- oder Sperrstellung zu überführen. Durch die Federkraft muss der korrespondierende Führungsstift lediglich leicht radial nach Innen bewegt werden, sodass der Spannring nach Überwinden dieser Sperrkraft sich durch die Federkraft sogar selbstständig in die Eingriffstellung bewegt.

Eine besonders genaue Anordnung des Spannrings im Verhältnis zu dem Grundkörper kann dadurch realisiert werden, dass die Spannringpositioniermittel einen Deckel oder eine Abdeckung umfassen, welche auf das distale Ende des Spannrings aufgesetzt wird und den Spannring somit in Einbaulage mit dem Grundkörper beidseitig einfasst oder einschließt.

Zwischen dem Deckel und dem Spannring können weitere Spannringpositioniermittel ausgebildet sein, z.B. in Form von komplementär ausgebildeten Stiften, welche in entsprechende Drehkurven oder Führungskurven eingreifen. Bevorzugt sind in einer Spannringhauptebene des Spannrings auf einem gedachten Kreis um die Drehachse herum Kurvenabschnitte oder Kurvensegmente ausgebildet, welche diese eine oder mehrere Drehkurven bilden in welchen Befestigungsschrauben geführt sind, welche den Deckel mit dem Spannfutter verbinden und dabei die Spannringhauptebene des Spannrings an diesen so als fungierende Drehkurven durchdringen.

Bevorzugt sind die Befestigungsschrauben als Senkkopfschrauben ausgebildet, die oberseitig in dem Deckel eingeschraubt sind.

Besonders bevorzugt werden drei Senkkopfschrauben um etwa 120 Grad versetzt zueinander auf der Oberfläche des Deckels durch den Spannring hindurch in den Grundkörper eingeschraubt, welcher die Spannbacken relativbeweglich aufnimmt.

Zur Vermeidung eines zu festen Verschraubens des Deckels auf dem Spannring können zwischen dem Grundkörper mit der darin aufgenommenen Spannbacke und dem Deckel Distanzbuchen vorgesehen sein, welche vorzugsweise aus Stahl bestehen und welche die Schrauben umschließen bzw. durch die Schrauben durchdrungen werden und welche in den Direktoren des Spannrings geführt sind. Vorzugsweise sind drei Schrauben vorgesehen, welche in entsprechende Drehkurven des Spannrings in Einbaulage eingreifen und besonders bevorzugt mit entsprechenden Distanzbuchsen versehen sind.

Eine besonders harmonische und einfach verstellbare Ausführungsform, welche also Unwuchten und die eingangs aufgezeigten Nachteile besonders gut vermeidet, sind in dem Grundkörper drei Spannbacken vorgesehen, insbesondere drei um jeweils mit der von der mittigen Drehachse radial abgehenden Mittelängsachse um 120 Grad zueinander in dem Spannfutter aufgenommen sind, wozu in dem Grundkörper korrespondierende, drei sternförmig sich von einem Grundkörperzentralbereich erstreckende Spannbackenaufnahmen ausgebildet sind, in welchen die Spannbacken radialverschieblich aufgenommen sind bzw. sitzen.

Jede Spannbacke weist dabei auf der distalen Oberseite ein kreisbogenförmiges Gewindesegment auf, so dass die drei Gewindesegmente zusammen den kreiszylindrischen Gewindestutzen mit dem Außengewinde zur Befestigung des komplementären Innengewindes in einer Zentralgewindeöffnung, also einer Öffnung mit einem Innengewinde in der Mitte des Sägebodens bilden. Jedes Gewindesegment ist also mit einem Gewindeabschnitt versehen, sodass aus den drei um 120 Grad versetzt zueinander angeordneten Spannbacken die Umfangsfläche des Außengewindes mit Unterbrechungen gebildet wird, auf welchem die Lochsäge mit dem Innengewinde in dem Sägeboden befestigt werden kann.

Vorzugsweise ist auf der distal ausgerichteten Oberseite der Spannbacken je ein Führungsstift vorgesehen, insbesondere in die Spannbacke eingesteckt, der in die komplementäre Führungskurve an dem Spannring eingreift und durch die Führungskurve bei der Drehung des Spannrings geführt wird.

Da die drei Spannbacken somit synchron verstellt werden, kann der Spannring in diesem Fall auch als Synchronring bezeichnet werden.

Das Schnellwechselspannfutter, bisweilen auch einfach als "Spannfutter" bezeichnet, ist also an seinem Hinterende ausgebildet zur drehfesten und vorzugsweise lösbaren Verbindung mit einem Antrieb, z.B. einem Bohrfutter einer Bohrmaschine oder eines Akkuschraubers, wozu diese vorzugsweise einen sich entlang der Drehachse erstreckenden Sechskant aufweist. An dem Vorderende, welches also von dem Antriebsende abgewandt ist, ist das Spannfutter mit einer Lochsäge lösbar verbindbar.

Die Lochsäge umfasst einen kreisringförmigen Sägekranz mit einer Säge am Vorderende sowie einem sich quer zu dem Sägekranz an einem hinteren Ende erstreckenden Sägeboden, sodass die Lochsäge also quasi topfförmig ausgebildet ist. Mittig in diesem Sägeboden ist eine Gewindeöffnung vorgesehen, die mit dem Außengewinde des Spannfutters lösbar verbindbar ist.

Zur besseren Vermeidung einer Relativbewegung zwischen der Lochsäge und dem Schnellwechselspannfutter sind vorzugsweise an der distalen Vorderseite des Schnellwechselspannfutters insbesondere zwei oder vier sich parallel versetzt von der Drehachse erstreckende Mitnehmerbolzen vorgesehen, die in korrespondierend ausgebildete Bolzenöffnungen im Sägeboden der Lochsäge eingreifen.

Die lösbare Befestigung des Zentrierbohrers innerhalb des Grundkörpers entlang der mittleren Drehachse erstreckend erfolgt vorzugsweise über eine seitliche in den Grundkörper einschraubbare Madenschraube.

Zur Anpassung an verschieden große Lochsägen mit unterschiedlich großen Zentralgewindeöffnungen von vorzugsweise ½- und 5/8- Zoll kann auf das Schnellspannfutter distalseitig von dem Deckel ein Adapterring aufgesetzt werden. Dieser Adapterring dient dazu, dass kleinere Lochsägen, die üblicherweise ein Innengewinde von 9/16-Zoll aufweisen, auf den oberen Gewindeabschnitt der Spannbacken aufsitzen und dort gehalten werden, also den oberen Abschnitt des Klemmabschnitts einer Spannbacke, der radial außenseitig mit dem Außengewinde oder Gewindesegment versehen ist. Der Adapterring umschließt also den unteren Hohlzylinderabschnitt des Hohlzylinderabschnitts von einer oder mehrerer Spannbacke(n) bis zu dem Begrenzungsflansch, welches den unteren und etwas breiteren Hohlzylinderabschnitt von dem oberen Gewindesegment trennt, das gegenüber dem Hohlzylinderabschnitt einen geringeren Außendurchmesser und das außenseitige Gewindesegment aufweist.

Kommen hingegen größere Lochsägen mit einem Außendurchmesser ab 32 mm zum Einsatz, haben diese üblicherweise ein Innengewinde von 5/8-Zoll, welches somit auf den etwas breiter ausgebildeten unteren Hohlzylinderabschnitt der Spannbacken aufsitzen und mit diesen verklemmbar sind. Hierfür wird folglich kein zwischengeschalteter Adapterring benötigt, sodass die größeren Lochsägen mit einem Außendurchmesser größer 32 mm unmittelbar auf dem distalseitigen Verbindungsende des Schnellwechselspannfutters bzw. der Mitnehmerbolzen aufsitzen.

In der folgenden, ausführlichen Figurenbeschreibung wird auf die beigefügten Zeichnungen Bezug genommen, die Teil dieser Erfindungsbeschreibung bilden und in denen zur Veranschaulichung spezifische Ausführungsformen gezeigt sind, mit denen die Erfindung ausgeübt werden kann. In dieser Hinsicht wird Richtungsterminologie, wie etwa "oben", "unten", "vorne", "hinten", "vorderes", "hinteres", usw. in Bezug auf die Orientierungen der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang definiert durch die Ansprüche, der vorliegenden Erfindung abzuweichen. Die folgende ausführliche Beschreibung ist nicht im einschränkenden Sinne aufzufassen. Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration.

Sofern nicht anders angegeben, beziehen sich der unbestimmte Artikel und der bestimmte Artikel nicht nur auf ein einzelnes Bauteil, sondern sind zu verstehen als "mindestens eins". Die Terminologie umfasst die zuvor genannten Worte, Abwandlungen davon sowie ähnliche Bedeutungen. Ferner sollte verstanden werden, dass die Begriffe "etwa", "im "Wesentlichen" und ähnliche Begriffe in Verbindung mit den Dimensionen und einer Eigenschaft einer Komponente der Erfindung die beschriebene Dimension und Eigenschaft nicht als strikte Grenze oder Parameter beschreiben und geringfügige Abwandlungen davon nicht ausschließen, welche funktional ähnlich sind. Zumindest umfassen Beschreibungsteile mit numerischen Parametern auch Abwandlungen dieser Parameter gemäß den mathematischen und fertigungstechnischen Prinzipien im Stand der Technik, z.B. Rundungen, Abweichungen und andere systematische Fehler, Fertigungstoleranzen etc.

In den Figuren werden identische oder ähnliche Elemente mit identischem Bezugszeichen versehen, soweit dieses zweckmäßig ist. Bezugszeichenlinien sind Linien, die das Bezugszeichen mit dem betreffenden Teil verbinden.

Ein Pfeil hingegen, der kein Teil berührt, bezieht sich auf eine gesamte Einheit, auf die er gerichtet ist.

Die Darstellungen in den Figuren sind im Übrigen nicht unbedingt maßstäblich. Zur Veranschaulichung von Details können bestimmte Bereiche übertrieben groß dargestellt sein. Darüber hinaus können die Zeichnungen plakativ vereinfacht sein und enthalten nicht jedes bei der praktischen Ausführung gegebenenfalls vorhandene Detail.

Gleiche Bezugsziffern der Figuren beziehen sich auf gleiche Bauteile bzw. Merkmale. Sämtliche Merkmale der jeweiligen Ausführungsbeispiele seien hierbei für sich eigenständig und unabhängig von anderen Merkmalen des jeweiligen Ausführungsbeispiels offenbart. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Figur 1: eine isometrische Draufsicht des erfindungsgemäßen Schnellwechselspannfutters;
- Figur 2: eine Explosionsdarstellung einer isometrischen Frontansicht des Schnellwechselspannfutters gemäß Figur 1;
- Figur 3: eine Seitenansicht der erfindungsgemäßen Lochsägeanordnung;
- Figur 4: eine Stirnansicht der Lochsägeanordnung gemäß Figur 3 von vorne;
- Figur 5: einen Längsschnitt der Lochsägeanordnung gemäß Figur 4 in der Seitenansicht entlang der Linien A-A gemäß Figur 4;
- Figur 6: einen Längsschnitt der Lochsägeanordnung gemäß Figur 4 entlang der Linie B-B gemäß Figur 4;
- Figur 7: eine Rückansicht der Lochsägeanordnung gemäß Figur 3 auf das Antriebsende;

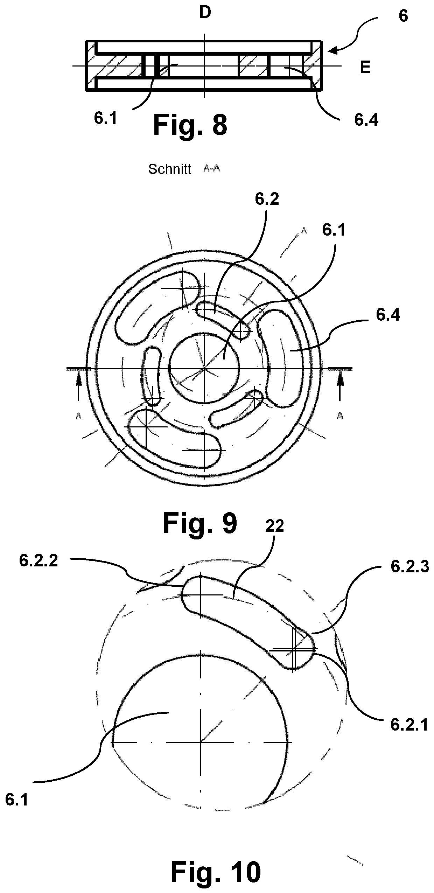

- Figur 8: eine vergrößerte Seitenansicht des Spannrings;
- Figur 9: eine Draufsicht des Spannrings gemäß Figur 8;
- Figur 10: einen vergrößerten Ausschnitt des mittleren Bereichs des Spannrings gemäß Figur 9 (Detail A);

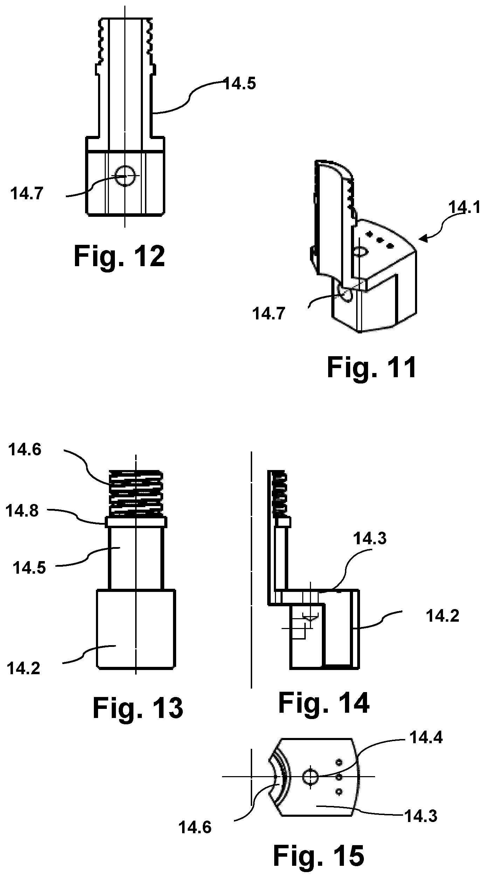

- Figur 11: eine isometrische Frontansicht einer Spannbacke;
- Figur 12: eine Stirnansicht der Spannbacke gemäß Figur 11;
- Figur 13: eine Stirnansicht der Spannbacke gemäß Figur 11 von vorne;
- Figur 14: eine Seitenansicht der Spannbacke gemäß Figur 11;
- Figur 15: eine Draufsicht der Spannbacke gemäß Figur 11;
- Figur 16: eine Stirnansicht des Schnellwechselspannfutters bei abgenommener Lochsäge.; und
- Figur 17: eine vergrößerte Draufsicht auf drei Spannbacken in der bevorzugten Anordnung in dem Grundkörper.

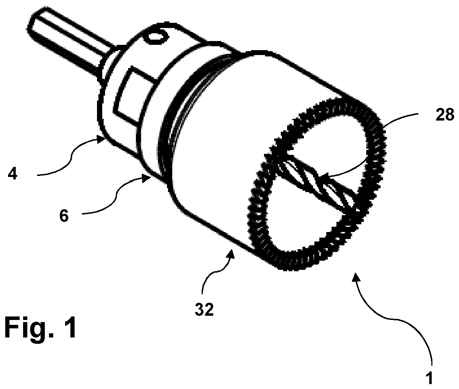

Figur 1 zeigt eine isometrische Seitenansicht der erfindungsgemäßen Lochsägenanordnung 1 umfassend ein Schnellwechselspannfutters 2 mit seinem, auf das stirnseitig am vorderen Verbindungsende eine Lochsäge 32 befestigt ist und in dem entlang der zentralen Drehachse D vorder- oder distalseitig ferner ein Zentrierbohrer 28 eingesetzt ist.

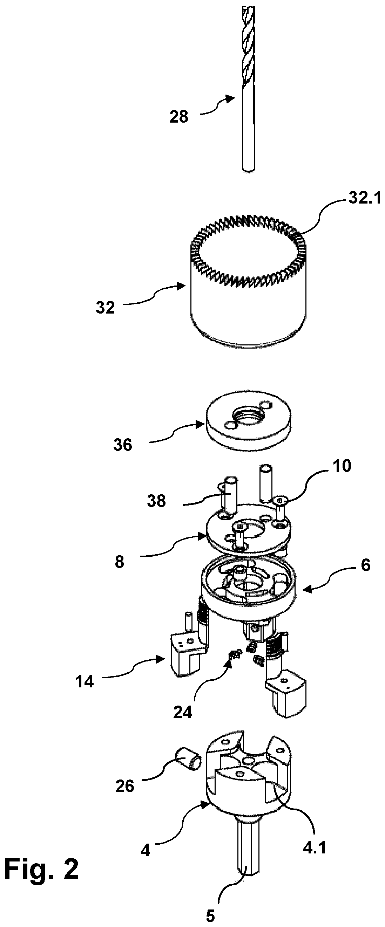

Figur 2 zeigt eine isometrische Explosionsdarstellung des Lochsägenanordnung gemäß Figur 1.

Demnach ist der Grundkörper 4 als ein im Wesentlichen rotationssymmetrisches, zylindrisches Drehteil ausgebildet, welches sich entlang einer Drehachse D von einem hinteren - proximalen - Antriebsende bis zu einem vorderen - distalen - Verbindungsende erstreckt. An dem Antriebsende ist der Grundkörper ausgebildet zur Verbindung mit einem Antrieb, insbesondere einem Bohrfutter, wozu der Grundkörper 4 in der vorliegenden Ausführungsform ein sich entlang der Drehachse D an dem Antriebsende erstreckenden Sechskant 5 eingesetzt ist. Dieser Sechskant 5 ist vorzugsweise lösbar mit dem Grundkörper 4 verbunden, kann aber auch einstückig mit dem Grundkörper 4 ausgebildet sein.

An dem distalen Verbindungsende weist der Grundkörper 4 drei um 120 Grad zueinander mit ihren Mittellängsachsen versetzt zueinander sich radial erstreckende Spannbackenaufnahmen 4.1 auf, welche größenmäßig angepasst sind zur Aufnahme von drei korrespondierend ausgebildeten Spannbacken 14, die jeweils radial verschieblich in den Spannbackenaufnahmen 4.1 des Grundkörpers 4 sitzen.

Die Spannbacken 14 umfassen jeweils eine Spannbackenbasis 14.1, die vorliegend ähnlich wie eine Stufe ausgebildet ist, also einen radial nach außen ragenden Vertikalabschnitt 4.2 aufweist, an den sich unter Einschluss eines rechten Winkels ein radial nach innen von diesem Vertikalabschnitt erstreckender Horizontalabschnitt 4.3 anschließt. Die Spannbackenbasis fungiert als Einsatzabschnitt der Spannbacke 14, ist also ausgebildet, um relativbeweglich in einer der drei um 120 Grad versetzt zueinander ausgebildeten Spannbackenaufnahmen des Grundkörpers 4 relativbeweglich eingesetzt zu werden. Der Vertikalabschnitt weist am Außenrand keine gerade Vorderseite auf, sondern eine äußere zylindrische Krümmung auf. Auf der distalen Oberseite des Horizontalabschnitts 14.3 ist ein Stiftloch 14.4 vorgesehen, in welchem jeweils ein Führungsstift 20 einsetzbar ist.

An der Oberseite des Horizontalabschnitts 14.3 ist ein versetzt zur Drehachse D erstreckender Hohlzylinderabschnitt 14.5 vorgesehen, hier einstückig angeformt, der sich distal nach oben erstreckt und an der oberen Hälfte einen Gewindesegmentabschnitt 14.6 mit einem Gewindesegment an der Außenfläche des Hohlzylinderabschnitts 14.5 aufweist. Dieser bildet den Klemmabschnitt der Spannbacke 14. Der proximale Hohlzylinderabschnitt 14.5 ist etwas breiter ausgebildet als der distale Gewindesegmentabschnitt, so dass auf den Gewindesegmentabschnitt 14.6 eine Lochsäge mit kleineren Zentralgewindeöffnungen mit einem Innendurchmesser von vorzugsweise 9/16 - Zoll unter Zwischenschaltung eines Adapterings 36 aufgesetzt werden.

Größere Lochsägen mit einer entsprechend größeren Zentralgewindeöffnung von üblicherweise 5/8 - Zoll werden hingegen ohne Verwendung ohne dieses Adapterring 36 mit dem proximalen Hohlzylinderabschnitt 14.5 der Spannbacken 14 verklemmt, der einen entsprechend größeren Außendurchmesser als der Gewindeabschnitt 14.6 aufweist.

Am Übergang zwischen dem proximalen Hohlzylinderabschnitt 14.5 und dem distalen Gewindeabschnitt 14.6 kann ein radial verbreiterter Bund 14.7 ausgebildet sein.

Eine Relativbewegung zwischen dem die Spannbacken 14 relativbeweglich aufnehmenden und vorzugsweise möglichst rotationssymmetrisch ausgebildeten Grundkörper 4 und der Lochsäge 32 wird teilweise durch die federgspannten Spannbacken 14 und ferner durch die Mitnehmerbolzen 38 bewirkt, welche in Einbaulage in korrespondierend ausgebildete Bolzenöffnungen 32.4 im Sägeboden 32.2 der Lochsäge 32 eingreifen. Diese Mitnehmerbolzen 38 sind beidseitig von der Drehachse D in entsprechende Haltelöcher in dem Deckel 8 eingesetzt oder mit diesem verbunden.

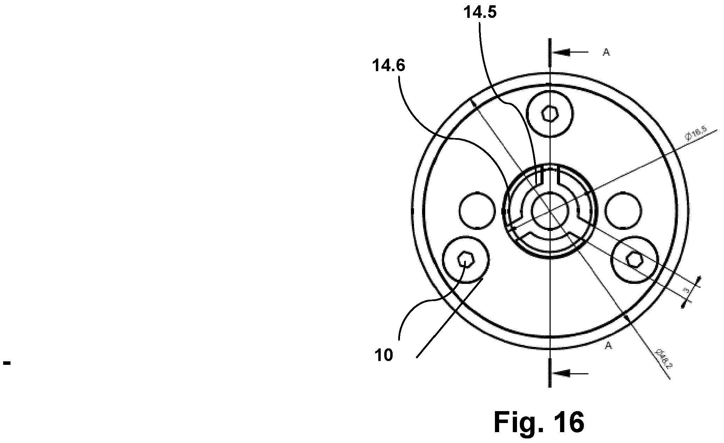

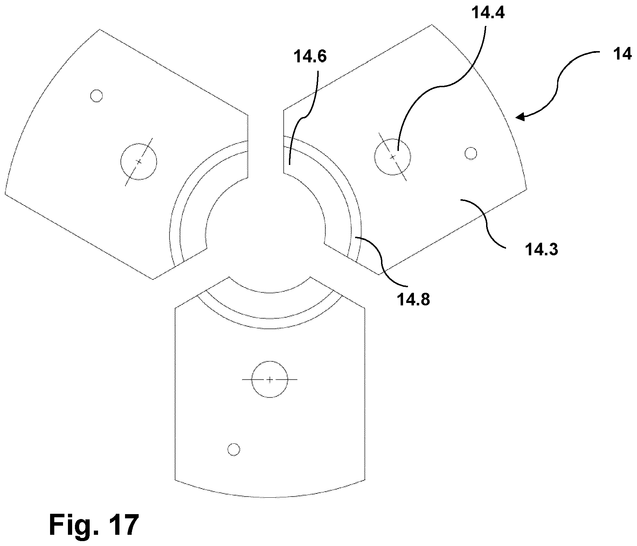

Wie besonders gut aus der vergrößerten Stirnansicht des Schnellspannfutters in Figur 16 oder der Spannbacken außerhalb des Schnellspannfutters in Figur 17 zu sehen ist, bilden drei solcher Spannbacken 14 mit den Hohlzylinderabschnitten 14.5 und mit außenseitigen Gewindesegmentabschnitten 14.6 in der radial außenseitigen Eingriffstellung das Außengewinde, auf welches eine Lochsäge mit einem korrespondierenden Innengewinde in dem Sägeboden 32.2 der Lochsäge 32 (Zentralgewindeöffnung) aufsetzbar ist.

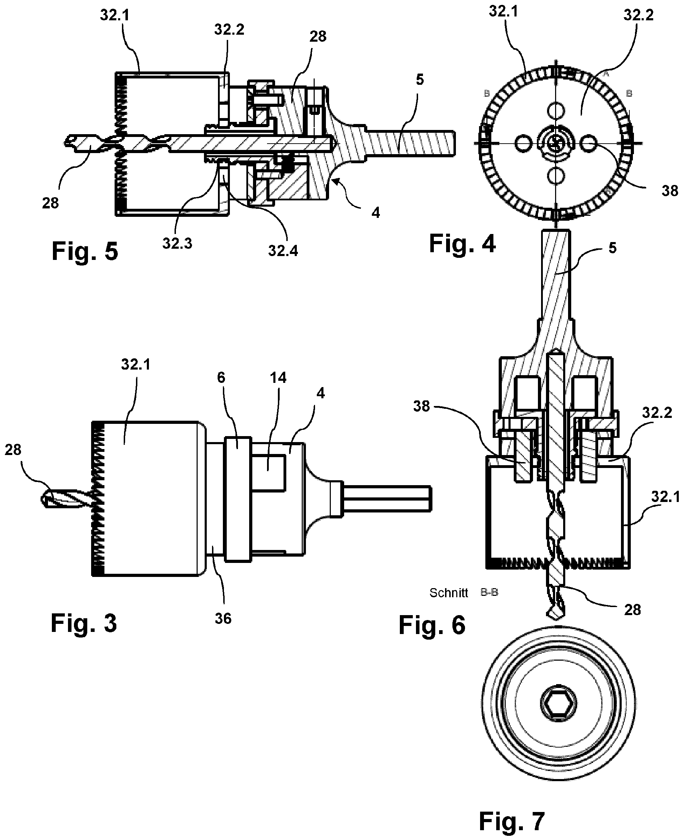

Der Spannring 4, welcher zusammen mit den Führungsstiften 20 das Lineargetriebe bildet, ist näher in den Figuren 3 bis 5 abgebildet. Der Spannring 4 besteht aus einem kreisrunden Metallkörper, der eine sich quer zur Drehachse D erstreckende Spannringhauptebene E bildet bzw. sich in dieser erstreckt. In dieser Spannringhauptebene E des Spannrings 4 sind korrespondierend zu den Spannbacken 14 bzw. den in diesen eingesteckten Führungsstiften 20 radial nach außen versetzt von einer mittigen Durchgangsöffnung 6.1 drei Führungskurven 6.2 vorgesehen, die sich jeweils von einem Kurvenvorderende 6.2.1 zu einem Kurvenhinterende 6.2.2 erstrecken.

Die Krümmung und die geometrische Ausbildung der Führungskurven 6.2 bestimmt somit den Verstellweg der Spannbacken 14 bei Drehung des Spannrings 4 um die Drehachse D.

Radial außenseitig an dem Kurvenvorderende 6.2.1 ist ein radial nach außen ragender Vorsprung 6.2.3 ausgebildet, der als Arretierung des Spannrings 6 in der eingezogenen Freigabestellung fungiert. Erst nach Überwinden der durch diese Arretierung gebildet Sperrkraft, bewegt sich der der Spannring durch Drehung im Uhrzeigerinn durch die Federkraft automatisch in die Eingriffstellung zu überführen.

Üblicherweise beträgt dieser Verstellweg der Spannbacken 14 nur wenige Millimeter, vorzugsweise 1,4 bis 3 mm, weshalb die Führungskurve 6.2 nahezu linear ausgebildet ist und nur eine geringe Krümmung aufweist. Konkret erstreckt sich die Führungskurve 6.2 mit dem Kurvenvorderende 6.2.1 mit der radialen Außenseite fast anliegend an den Mittelkreis 22, wohingegen das Kurvenhinterende 6.2.2 so in der Spannringhauptebene E des Spannrings ausgebildet ist, dass der Mittelkreis 22 nahezu mittig in dem Kurvenhinterende 6.2.2 verläuft. Die Führungskurve 6.2 verläuft also nicht entlang einer Kreisbahn um die Drehachse D, sondern verläuft im Urzeigersinn leicht radial nach außen gehend.

Durch die in Federöffnungen 14.7 der Spannbacken eingesetzte Druckfedern 24 an der Innenseite von jeder Spannbackenbasis 14.1, die gegen einen Zentralbereich des Grundkörpers 4 drückt, wird der in dem Horizontalabschnitt 14.3 der Spannbacke 14 eingesetzte Führungsstift 20 gegen den Außenrand der Führungskurve 6.2 gedrückt und bei Drehung des Spannrings 6 durch diesen Außenrand geführt. Nach Überwinden der durch den Vorsprung 6.3 erzeugten Lösekraft werden bei Drehung des Spannrings 6 im Uhrzeigersinn die Spannbacken 14 durch die Federkraft der Druckfedern 24 automatisch nach außen in die Eingriffstellung gedrückt. Umgekehrt werden die Spannbacken 14 bei Drehung des Spannrings 6 gegen den Uhrzeigersinn gegen die Federkraft radial nach innen gezogen in die Freigabestellung.

Insbesondere aus Figuren 16 und 17 ist zu entnehmen, dass sich die Gewindesegmente 14.6 der Spannbacken 14 am distalen Ende der Hohlzylinderabschnitte 14.5 jeweils über einen Bereich von etwa 120 Grad erstrecken, sodass drei Gewindesegmente zusammengesetzt - mit Unterbrechung - ein Außengewinde bilden, auf welches eine Lochsäge 32 aufgesetzt und fixiert werden kann.

Der Spannring 6 umfasst einen sich am äußeren Umfangsrand von der durch den Spannring definierten und sich quer zur Drehachse erstreckenden Spannringhauptebene E, in der sich vorzugsweise eine Spannringplatte erstreckt, sich vorzugsweise um den gleichen Betrag, jeweils quer zur Spannringhauptebene E sich distal und proximal erstreckenden Außenflansch 6.5, der ausgebildet ist, um distalseitig auf dem Grundkörper 4 aufzusitzen und diesen zu umgreifen und distalseitig den Deckel 8 aufzunehmen.

Der Deckel 8 ist über die drei Senkkopfschrauben 10 mit dem Stirnabschnitt des Grundkörpers 4 zwischen den Spannbackenaufnahmen 4.1 verschraubt, in denen Gewindelöcher zur Aufnahme der Senkkopfschrauben vorgesehen sind.

Um ein zu festes Anziehen des Deckels 8 und somit Verklemmen des Spannrings 6 zu vermeiden, sind als Distanzbuchsen fungierende Metallringe in auf einem äußeren Kreis außerhalb von den Führungskulissen 6.2 ausgebildeten Drehöffnungen 6.4 an dem Spannring 6 eingesetzt.

Ein Zentrierbohrer 28 ist über eine seitlich in ein Gewinde eingedrehte Madenschraube 26 mittig in dem Grundkörper 4 fixierbar.

Zusammenfassend betrifft die Erfindung ein Schnellwechselspannfutter zur Verbindung einer Lochsäge mit einem Antrieb, z. B. einer Bohrmaschine. Das um eine Drehachse rotierbare Schnellwechselspannfutter weist zur lösbaren Verbindung mit einer Lochsäge um die Drehachse herum angeordnete Gewindesegmente zur Bildung eines Außengewindes auf, wobei mindestens ein Gewindesegment auf einer verstellbaren sowie durch eine Feder vorgespannte Spannbacke angeordnet ist und das mindestens eine Gewindesegment aus einer radial weiter außen gelegenen Eingriffstellung gegen eine Federkraft in eine im Verhältnis zu dieser Eingriffstellung weiter radial nach innen gelegenen Freigabestellung bewegbar ist. Zum Vereinfachen des Lösens der mindestens eine Spannbacke ist ein um die Drehachse drehbarer Spannring vorgesehen, der ausgebildet ist, um bei einer Drehung die mindestens eine Spannbacke aus der Eingriff- in die Freigabestellung zu überführen. Vorzugsweise sind drei Spannbacken vorgesehen.

### Bezugszeichenliste

- D: Drehachse
- E: Hauptebene
- 1: Lochsägenanordnung
- 2: Schnellwechselspannfutter
- 4: Grundkörper
- 4.1 4.2: Spannbackenaufnahme Gewindeloch
- 5: Sechskant
- 6: Spannring
- 6.1: Durchgangsöffnung
- 6.2: Führungskurve
- 6.2.1: Kurvenvorderende
- 6.2.2: Kurvenhinterende
- 6.3: Vorsprung
- 6.4: Drehöffnung
- 6.5: Außenflansch
- 8: Deckel
- 10: Senkkopfschraube
- 12: Sechskant
- 14: Spannbacke
- 14.1: Spannbackenbasis
- 14.2: Vertikalabschnitt
- 14.3: Horizontalabschnitt
- 14.4: Stiftloch
- 14.5: Hohlzylinderabschnitt
- 14.6: Gewindesegmentabschnitt
- 14.7: Federöffnung
- 14.8: Bund
- 20: Führungsstift
- 22: Mittelkreis
- 24: Druckfeder
- 26: Madenschraube
- 28: Zentrierbohrer
- 30: Distanzbuchse
- 32: Lochsäge
- 32.1: Sägekranz
- 32.2: Sägeboden
- 32.3: Zentralgewindeöffnung
- 32.4: Bolzenöffnung
- 36: Adapterring
- 38: Mitnehmerbolzen

## Patentansprüche

1. Um eine Drehachse (D) rotierbares Schnellwechselspannfutter für eine Lochsäge (32),
das sich entlang der Drehachse (D) von einem hinteren Antriebsende ausgebildet zur lösbaren Verbindung mit einem Antrieb zu einem vorderen Verbindungsende zur lösbaren Verbindung mit der Lochsäge (32) erstreckt,
umfassend einen Grundkörper (4) mit mindestens einer Spannbackenaufnahme und mindestens einer darin angeordneten, radial im Verhältnis zur Drehachse (D) verstellbaren Spannbacke (14),
wobei an dem Verbindungsende um die Drehachse herum angeordnete Gewindesegmente (14.6) zur Bildung eines Außengewindes vorgesehen sind,
wobei mindestens ein Gewindesegment (14.6) an der Spannbacke (14) ausgebildet ist, wobei zwischen der Spannbacke (14) und dem Grundkörper (4) eine Feder (24) angeordnet ist, **dadurch gekennzeichnet,**
**dass** ein um die Drehachse (D) drehbarer Spannring (6) vorgesehen ist,
der ausgebildet ist, um bei einer Drehung die mindestens eine Spannbacke (14) mit dem Gewindesegment (14.6) aus einer weiter radial außen gelegenen Eingriffstellung gegen eine Federkraft der Feder (24) in eine im Verhältnis zu dieser Eingriffstellung weiter radial nach innen gelegene Freigabestellung bewegt,
**dass** der Spannring mindestens eine Führungskurve (6.2) zur Bildung einer Führungskulisse in einer sich quer zur Drehachse erstreckende Spannringhauptebene mit einem Kurvenvorderende (6.2.1) und einem Kurvenhinterende (6.2.2) aufweist,
**dass** das Kurvenvorderende (6.2.1.) radial näher zur Drehachse (D) gelegen ist als das Kurvenhinterende (6.2.2)
und **dass** an der mindestens einen Spannbacke ein mit der mindestens einen Führungskurve zusammenwirkender und von dieser geführter Führungsstift (20) vorgesehen ist.

2. Schnellwechselspannfutter nach einem der vorhergehenden Ansprüche,
**DADURCH GEKENNZEICHNET,**
**dass** der Spannring (6) über einen vorzugsweise plattenförmigen Deckel (8) mit einem Grundkörper (4) verbindbar ist.

3. Schnellwechselspannfutter nach Anspruch 2,
**DADURCH GEKENNZEICHNET,**
**dass** der Deckel (8) mit dem Grundkörper über Schrauben verbunden ist, welche als Führungen fungierende Drehöffnungen (6.4) in dem Spannring (6) durchdringen.

4. Schnellwechselspannfutter nach Anspruch 3,
**DADURCH GEKENNZEICHNET,**
**dass** die Schrauben von Distanzbuchsen (30) eingefasst sind.

5. Schnellwechselspannfutter nach einem der vorhergehenden Ansprüche,
**DADURCH GEKENNZEICHNET,**
**dass** dieses drei Spannbackenaufnahmen (4.1) zur beweglichen Aufnahme von drei Spannbacken (14) mit je einem Gewindesegment (14.6) aufweist.

6. Schnellwechselspannfutter nach Anspruch 5,
**DADURCH GEKENNZEICHNET,**
**dass** der Spannring (6) für jede Spannbacke (14) eine getrennte Führungskurve (6.2) aufweist

7. Schnellwechselspannfutter nach einem der vorhergehenden Ansprüche,
**DADURCH GEKENNZEICHNET,**
**dass** der Spannring (6) eine sich in Einbaulage quer zur Drehachse erstreckende Spannringhauptebene (E) aufweist
und **dass** zwischen dem Spannring (6) und dem Grundkörper (4) Spannringpositioniermittel vorgesehen sind, welche eine koaxiale und drehbewegliche Anordnung des Spannrings (6) realisieren

8. Schnellwechselspannfutter nach Anspruch 7,
**DADURCH GEKENNZEICHNET,**
**dass** die Spannringpositioniermittel einen radial außenseitig an dem Spannring (6) ausgebildeten Flansch umfassen, der zumindest den Grundkörper (4) in Einbaulage umfasst.

9. Schnellwechselspannfutter nach einem der vorhergehenden Ansprüche,
**DADURCH GEKENNZEICHNET,**
**dass** der Drehring eine Arretiervorrichtung umfasst.

10. Schnellwechselspannfutter nach Anspruch 9,
**DADURCH GEKENNZEICHNET,**
**dass** die Arretiervorrichtung einen radial sich nach außen erstreckenden Vorsprung (6.3) aufweist.

11. Schnellwechselspannfutter nach einem der vorhergehendenden Ansprüche,
**DADURCH GEKENNZEICHNET,**
**dass** die mindestens eine Spannbacke einen Einsatzabschnnitt ausgebildet zum relativbeweglichen Einsetzen in eine komplementär ausgebildete Spannbackenaufnahme des Grundkörpers (4) sowie einen sich an diesen anschließenden Klemmabschnitt aufweist, der ausgebildet ist zum Verklemmen mit einer Zentralgewindeöffnung in dem Sägeboden der Lochsäge (32).

12. Schnellwechselspannfutter nach Anspruch 11,
**DADURCH GEKENNZEICHNET,**
**dass** der Klemmabschnitt ein sich an den Einsatzabschnitt anschließenden Hohlzylinderabschnitt (14.5) umfasst, der sich in Einbaulage parallel versetzt zur Drehachse (D) von dem Einsatzabschnitt erstreckt und übergeht in einen sich distal an diesen anschließenden Gewindeabschnitt mit einem außenseitigen Gewindesegment (14.6).

## Claims

1. A quick-change chuck for a hole saw (32) that can be rotated about an axis of rotation (D),
which extends along the axis of rotation (D) from a rear drive end designed for detachable connection to a drive to a front connection end for detachable connection to the hole saw (32),
comprising a base body (4) having at least one clamping jaw receptacle and at least one clamping jaw (14) arranged therein and radially adjustable in relation to the axis of rotation (D),
wherein thread segments (14.6) arranged around the axis of rotation are provided at the connecting end to form an external thread,
wherein at least one thread segment (14.6) is formed on the clamping jaw (14),
wherein a spring (24) is arranged between the clamping jaw (14) and the base body (4), **CHARACTERIZED IN**
**that** a clamping ring (6) rotatable about the axis of rotation (D) is provided, which is designed, upon rotation, to move the at least one clamping jaw (14) with the threaded segment (14.6) against the spring force from an engagement position located further radially outwards into a release position located further radially inwards in relation to this engagement position,
**that** the clamping ring comprises at least one guide cam (6.2) for forming a guide slot in a clamping ring main plane extending transversely to the axis of rotation, with a cam front end (6.2.1) and a cam rear end (6.2.2),
**that** the front end of the curve (6.2.1) is located radially closer to the axis of rotation (D) than the rear end of the curve (6.2.2) and that a guide pin (20) cooperating with and guided by that one guide cam is provided on the at least one clamping jaw.

2. Quick-change clamping chuck according to one of the preceding claims,
**CHARACTERIZED IN THAT**
the clamping ring (6) can be connected to a base body (4) via a preferably plate-shaped cover (8).

3. Quick-change clamping chuck according to claim 2,
**CHARACTERIZED IN THAT in that** the cover (8) is connected to the base body by screws which pass through rotary openings (6.4) in the clamping ring (6) acting as guides.

4. Quick-change clamping chuck according to claim 3,
**CHARACTERIZED IN THAT** the screws are enclosed by spacer bushes (30).

5. Quick-change chuck according to one of the preceding claims,
**CHARACTERIZED IN THAT**
it has three clamping jaw mounts (4.1) for movably holding three clamping jaws (14), each with a threaded segment (14.6).

6. Quick-change chuck according to claim 5,
**CHARACTERIZED IN THAT**
the clamping ring (6) has a separate guide curve (6.2) for each clamping jaw (14).

7. Quick-change clamping chuck according to one of the preceding claims,
**CHARACTERIZED IN THAT**
the clamping ring (6) has a clamping ring main plane (E) extending transversely to the axis of rotation in the installed position and **in that** clamping ring positioning means are provided between the clamping ring (6) and the base body (4), which realize a coaxial and rotationally movable arrangement of the clamping ring (6).

8. Quick-change clamping chuck according to claim 7,
**CHARACTERIZED IN THAT** the clamping ring positioning means comprise a flange formed radially on the outside of the clamping ring (6), which flange overreaches at least the base body (4) in the installed position.

9. Quick-change chuck according to one of the preceding claims,
**CHARACTERIZED IN THAT**
**in that** the rotating ring comprises a locking device.

10. Quick-change chuck according to claim 9,
**CHARACTERIZED IN THAT**
the locking device has a radially outwardly extending projection (6.3).

11. Quick-change chuck according to one of the preceding claims,
**CHARACTERIZED IN THAT**
the at least one clamping jaw comprises an insert section designed for relatively movable insertion into a complementarily designed clamping jaw receptacle of the base body (4) and a clamping section adjoining the latter, which is designed for clamping with a central threaded opening in the saw base of the hole saw (32).

12. Quick-change chuck according to claim 11,
**CHARACTERIZED IN THAT**
the clamping section comprises a hollow cylinder section (14.5) adjoining to the insert section in the installed position displaced in parallel to the axis of rotation (D) from the insert section and changing into a distally extending threaded section with an outside external thread segment (14.6).

## Revendications

1. Mandrin à serrage rapide pour une scie cloche (32), lequel peut tourner autour d'un axe de rotation (D),
qui s'étend le long de l'axe de rotation (D) depuis une extrémité d'entraînement arrière, conçue pour la liaison amovible avec un entraînement, jusqu'à une extrémité de liaison avant conçue pour la liaison amovible avec la scie cloche (32),
comprenant un corps de base (4) qui présente au moins un logement de mâchoire de serrage et au moins une mâchoire de serrage (14) disposée dans celui-ci et déplaçable radialement par rapport à l'axe de rotation (D),
des segments filetés (14.6) conçus pour former un filetage et disposés autour de l'axe de rotation étant prévus à l'extrémité de liaison,
au moins un segment fileté (14.6) étant formé sur la mâchoire de serrage (14), un ressort (24) étant disposé entre la mâchoire de serrage (14) et le corps de base (4),
**caractérisé en ce que**
il est prévu une bague de serrage (6) pouvant tourner autour de l'axe de rotation (D), qui est conçue pour, lors d'une rotation, déplacer ladite au moins une mâchoire de serrage (14), pourvue du segment fileté (14.6), depuis une position d'engagement située radialement plus vers l'extérieur, à l'encontre d'une force élastique du ressort (24), jusque dans une position de libération située radialement plus vers l'intérieur par rapport à ladite position d'engagement,
**en ce que** la bague de serrage présente au moins une came de guidage (6.2) qui est destinée à former une coulisse de guidage dans un plan principal de la bague de serrage s'étendant transversalement à l'axe de rotation, et qui présente une extrémité avant de came (6.2.1) et une extrémité arrière de came (6.2.2),
**en ce que** l'extrémité avant de came (6.2.1.) est située radialement plus près de l'axe de rotation (D) que l'extrémité arrière de came (6.2.2),
et **en ce qu'**il est prévu une tige de guidage (20) sur ladite au moins une mâchoire de serrage, qui coopère avec ladite au moins une came de guidage et qui est guidée par celle-ci.

2. Mandrin à serrage rapide selon la revendication précédente,
**caractérisé en ce que**
la bague de serrage (6) peut être reliée à un corps de base (4) par l'intermédiaire d'un couvercle (8) de préférence en forme de plaque.

3. Mandrin à serrage rapide selon la revendication 2,
**caractérisé en ce que**
le couvercle (8) est relié au corps de base par des vis qui traversent des ouvertures de rotation (6.4) ménagées dans la bague de serrage (6) et faisant office de guides.

4. Mandrin à serrage rapide selon la revendication 3,
**caractérisé en ce que**
les vis sont entourées de douilles d'écartement (30).

5. Mandrin à serrage rapide selon l'une des revendications précédentes,
**caractérisé en ce que**
celui-ci présente trois logements de mâchoire de serrage (4.1) pour recevoir de manière mobile trois mâchoires de serrage (14) ayant chacune un segment fileté (14.6).

6. Mandrin à serrage rapide selon la revendication 5,
**caractérisé en ce que**
la bague de serrage (6) présente une came de guidage séparée (6.2) pour chaque mâchoire de serrage (14).

7. Mandrin à serrage rapide selon l'une des revendications précédentes,
**caractérisé en ce que**
la bague de serrage (6) présente un plan principal de bague de serrage (E) s'étendant transversalement à l'axe de rotation, en position de montage,
et **en ce que** des moyens de positionnement de la bague de serrage sont prévus entre la bague de serrage (6) et le corps de base (4), lesquels assurent une disposition coaxiale et mobile en rotation de la bague de serrage (6).

8. Mandrin à serrage rapide selon la revendication 7,
**caractérisé en ce que**
les moyens de positionnement de la bague de serrage comprennent une bride formée radialement à l'extérieur sur la bague de serrage (6), qui entoure au moins le corps de base (4) en position de montage.

9. Mandrin à serrage rapide selon l'une des revendications précédentes,
**caractérisé en ce que**
la bague rotative comprend un dispositif de blocage.

10. Mandrin à serrage rapide selon la revendication 9,
**caractérisé en ce que**
le dispositif de blocage présente une saillie (6.3) s'étendant radialement vers l'extérieur.

11. Mandrin à serrage rapide selon l'une des revendications précédentes,
**caractérisé en ce que**
ladite au moins une mâchoire de serrage comprend une portion d'insertion conçue pour être insérée de façon relativement mobile dans un logement de mâchoire de serrage, réalisé de façon complémentaire, du corps de base (4), ainsi qu'une portion de coincement qui se raccorde à celle-ci et qui est conçue pour être coincée dans une ouverture à taraudage central dans le fond de scie de la scie cloche (32).

12. Mandrin à serrage rapide selon la revendication 11,
**caractérisé en ce que** la portion de coincement comprend une portion cylindrique creuse (14.5) qui se raccorde à la portion d'insertion et qui s'étend, en position de montage, en décalage parallèlement à l'axe de rotation (D) depuis la portion d'insertion et se transforme en une portion filetée qui se raccorde de manière distale à celle-ci et qui présente un segment fileté (14.6) côté extérieur.
